# EUROPÄISCHE PATENTSCHRIFT

(11) **EP 2 915 732 B1**
(45) Veröffentlichungstag und Bekanntmachung des Hinweises auf die Patenterteilung: **28.08.2019**
(21) Anmeldenummer: 15157512.3
(22) Anmeldetag: 04.03.2015
(51) Int. Cl.: B62M 6/80, B62K 19/30

(54) **Elektrofahrzeug mit integriertem Ladekabel**
Electric Vehicle With Integrated Charging Cable
Véhicule électrique avec câble de charge intégré

(30) Priorität: 04.03.2014 DE 102014002741
(43) Veröffentlichungstag der Anmeldung: 09.09.2015
(73) Patentinhaber: Marquardt Verwaltungs-GmbH, 78604 Rietheim-Weilheim (DE)
(72) Erfinder: Broghammer, Peter, 78573 Wurmlingen (DE)
(74) Vertreter: Otten, Roth, Dobler & Partner mbB Patentanwälte

(56) Entgegenhaltungen:
- EP-A1- 1 215 111
- WO-A1-02/04280
- WO-A1-2012/107448
- WO-A2-2008/157443
- CN-U- 202 917 607
- DE-U1- 20 104 786
- DE-U1-202009 011 119
- US-A1- 2012 197 470
- US-B1- 6 505 846

## Beschreibung

Die Erfindung betrifft ein Fahrzeug nach dem Oberbegriff des Patentanspruchs 1.

Es handelt sich um Fahrzeuge, welche mit einem Elektroantrieb versehen sind. Insbesondere handelt es sich dabei um Pedelecs, E-Bikes oder dergleichen.

Ein derartiges aus der WO 2012/107448 A1 bekanntes Fahrzeug besitzt einen Rahmen. Am Rahmen ist ein Akku zur Energieversorgung für den Elektroantrieb angeordnet. Der Akku ist mit der einen Seite eines Ladekabels elektrisch verbunden. Dadurch ist eine Energieübertragung mittels des Ladekabels von einer Ladestation auf den Akku zum Aufladen des Akkus ermöglicht. Das Mitführen des Ladekabels, um den Akku auch unterwegs aufladen zu können, ist für den Benutzer jedoch unhandlich.

Ein derartiges Fahrzeug ist auch aus der CN 202 917 607 U bekannt. Bei diesem Fahrzeug ist weiterhin das Ladekabel ausziehbar und einschiebbar im Rahmen in der Art eines integrierten Ladekabels, nach dem Oberbegriff des Anspruchs 1 angeordnet. Insbesondere ist das integrierte Ladekabel in einem Rahmenrohr, wie dem Oberrohr, dem Unterrohr, dem Sattelrohr o. dgl., des Rahmens angeordnet.

Mit den Druckschriften US 6 505 846 B1, DE 201 04 786 U1 und WO 02/04280 A1 sind weiterhin Fahrradschlösser bekannt geworden, deren Sicherungsseile in den Rahmen des Fahrrades integriert sind.

Der Erfindung liegt die Aufgabe zugrunde, das Fahrzeug so weiterzuentwickeln, dass die Handhabbarkeit des Ladekabels verbessert ist.

Diese Aufgabe wird bei einem gattungsgemäßen Fahrzeug durch die kennzeichnenden Merkmale des Anspruchs 1 gelöst.

Beim erfindungsgemäßen Fahrzeug ist wenigstens ein Anschlag im Rahmen angeordnet zur Zusammenwirkung mit dem integrierten Ladekabel, derart dass die eingeschobene Position des Ladekabels im Rahmen fixiert ist. Wenigstes ein weiterer Anschlag ist im Rahmen angeordnet zur Zusammenwirkung mit dem integrierten Ladekabel, derart dass die Ausziehlänge des integrierten Ladekabels begrenzt ist, wobei das integrierte Ladekabel (4) mittels eines geschützt im Rahmen (2) befindlichen Spiralkabels (14) über eine Elektronik (15) mit dem Akku (3) elektrisch verbunden ist. Dabei handelt es sich vorteilhafterweise um eine einfache und kostengünstige Lösung, wobei die Handhabung des großen, schweren sowie unhandlichen bisherigen Ladekabels vermieden ist sowie die Betriebssicherheit gesteigert ist. Weitere Ausgestaltungen der Erfindung sind Gegenstand der Unteransprüche.

In einer weiteren Ausgestaltung kann an der anderen Seite des integrierten Ladekabels ein Stecker zur Aufnahme in einer Steckdose an der Ladestation angeordnet sein. Der Stecker -3-ein mechanisches Schloss und/oder ein elektrisches Schloss Verwendung finden. Dann dient das integrierte Ladekabel gleichzeitig als Diebstahlsicherung bzw. Diebstahlschutz für das Fahrzeug, wenn dieses an die Ladestation angeschlossen ist.

In Erweiterung der Funktionalität kann der Akku eine Steckdose aufweisen, die insbesondere zur Aufnahme eines Steckers von einem separaten Ladekabel zur Ladestation dient. Mit Hilfe des separaten Ladekabels kann dann eine Energieübertragung von der Ladestation auf den Akku zum Aufladen des Akkus ermöglicht sein. Dadurch erhält der Benutzer eine Wahlmöglichkeit im Hinblick auf die Verwendung des integrierten Ladekabels oder des separaten Ladekabels zur Aufladung des Akkus. Es kann weiter eine Verriegelungseinrichtung für die Steckdose im Akku vorgesehen sein, derart dass der in der Steckdose eingesteckte Stecker des separaten Ladekabels mittels der Verriegelungseinrichtung in der Steckdose sperrbar und/oder freigebbar ist. Desweiteren kann auch der Stecker des integrierten Ladekabels verriegelbar in die Steckdose am Akku einsteckbar sein, so dass damit auch zusätzlich eine Diebstahlsicherung mittels des integrierten Ladekabels für das Fahrzeug geschaffen ist. Bei Verzicht auf die Funktionalität der Aufladbarkeit des Akkus mittels des separaten Ladekabels benötigt die Steckdose keine elektrische Verbindung zum Akku. Vielmehr dient die Steckdose dann lediglich zur verriegelbaren Aufnahme des Steckers am integrierten Ladekabel bei dessen Verwendung zur Diebstahlsicherung des Fahrzeugs.

In kostengünstiger sowie funktionssicherer Ausgestaltung kann der Stecker des Ladekabels einen Hinterschnitt aufweisen. Die Verriegelungseinrichtung kann einen bewegbaren Hebel umfassen, derart dass der Hebel zur Verriegelung in den Hinterschnitt des in die Steckdose eingesteckten Steckers des Ladekabels eingreifen kann.

In einfacher Art und Weise kann das integrierte Ladekabel zwecks Ausziehbarkeit über eine Zugentlastung mit dem Akku elektrisch verbunden sein. Das integrierte Ladekabel kann eine gewisse Grundsteifigkeit besitzen, um dessen Ausziehbarkeit zur Benutzung und/oder dessen Einschiebbarkeit nach der Benutzung zu unterstützen.

Zur Steigerung des Diebstahlschutzes für das Fahrzeug kann bei einer Manipulation am Ladekabel und/oder am Fahrzeug ein Alarm erzeugbar sein. Ein solcher Alarm kann akustisch, optisch o. dgl. am Fahrzeug ausgegeben werden. Es kann in diesem Fall auch eine Meldung an ein Telefon, beispielsweise ein Mobiltelefon, ein Smartphone o. dgl., des berechtigten Benutzers übermittelt werden, um diesem den entsprechenden Warnhinweis zu geben beziehungsweise diesem die Einleitung einer entsprechenden Reaktion zu ermöglichen. Desweiteren kann in einem solchen Fall auch der Betrieb des Fahrzeugs gesperrt werden.

Die Erfindung stellt weiterhin ein Ladekabel mit einem Stecker sowie einer elektrischen Leitung bereit. Der Stecker weist eine metallische Hülle und/oder die Leitung eine metallische Ummantelung auf. Der Einfachheit halber kann es sich anbieten, dass der Hinterschnitt an der metallischen Hülle befindlich ist. Dabei kann die metallische Umhüllung an der metallischen Ummantelung mittels einer Crimp-Verbindung befestigt sein. In einfacher sowie kostengünstiger Ausgestaltung kann die metallische Ummantelung aus einem Metallschlauch bestehen. Die metallische Hülle kann aus einem Drehteil, einem Tiefziehteil, einem Gießteil o. dgl. bestehen. Eine solche Ausgestaltung verhindert ein Durchschneiden des Ladekabels und bietet daher einen guten Diebstahlschutz.

Für eine besonders bevorzugte Ausgestaltung der Erfindung ist nachfolgendes festzustellen.

Bei Pedelecs und/oder E-Bikes besteht die Notwendigkeit, die Fahrzeuge auch unterwegs zu laden. Eine Lade- und/oder Schließfunktion kann sinnvollerweise kombiniert werden. Allerdings ist es umständlich, das Kabel am Pedelec und/oder E-Bike mitzuführen. Ein Ladekabel fest an der Ladesäule zu installieren ist nicht zulässig. Es soll eine Lösung gefunden werden, bei der ein Ladekabel, insbesondere mit einer Schließfunktion, auf eine praktikable und kostengünstige Methode am Pedelec und/oder E-Bike mitgeführt werden kann.

Das Ladekabel, das insbesondere mit einer Schließfunktion ausgestattet ist, wird so gestaltet, dass es während des Transports und/oder dem Bewegen des Pedelecs und/oder E-Bikes im Rahmenrohr untergebracht ist. Dies kann im Ober-, Unter- oder Sattelrohr stattfinden. Das Ladekabel hat eine Grundsteifigkeit, die es erlaubt, das Kabel nach Benutzung auch wieder einzuschieben. Am einen Ende befindet sich der Ladestecker, der eine metallische Ummantelung hat und einen Hinterschnitt, damit der Stecker, sobald dieser in der Ladestation gesteckt ist, mechanisch und/oder elektrisch verriegelt werden kann. Das Ladekabel ist mit einer metallischen Ummantelung versehen, die verhindert, dass das Kabel leicht abgeschnitten werden kann. Es kann auch elektronisch abgefragt werden, falls das Kabel manipuliert wird. Hierdurch kann das elektrische System des Pedelecs und/oder E-Bikes verriegelt werden und/oder ein akustischer Alarm ausgelöst werden. Denkbar ist auch, eine Meldung auf ein Smartphone zu senden, falls am Kabel und/oder am Fahrzeug manipuliert wird. Wird Zug auf das Kabel ausgeübt, wirkt dieser vollständig auf den metallischen Stecker und/oder die metallische Ummantelung. Das eigentliche elektrische Kabel ist gegen Zug und/oder Druck entlastet. An einem Ende befindet sich der Stecker mit Schließgeometrie, das andere Ende ist über eine Zugentlastung elektrisch mit der Elektronik des Pedelecs und/oder E-Bikes verbunden.

Geschaffen ist somit ein integriertes Ladekabel, das insbesondere zusätzlich mit einer Schließfunktion versehen ist, für ELVs (Electric Light Vehicles).

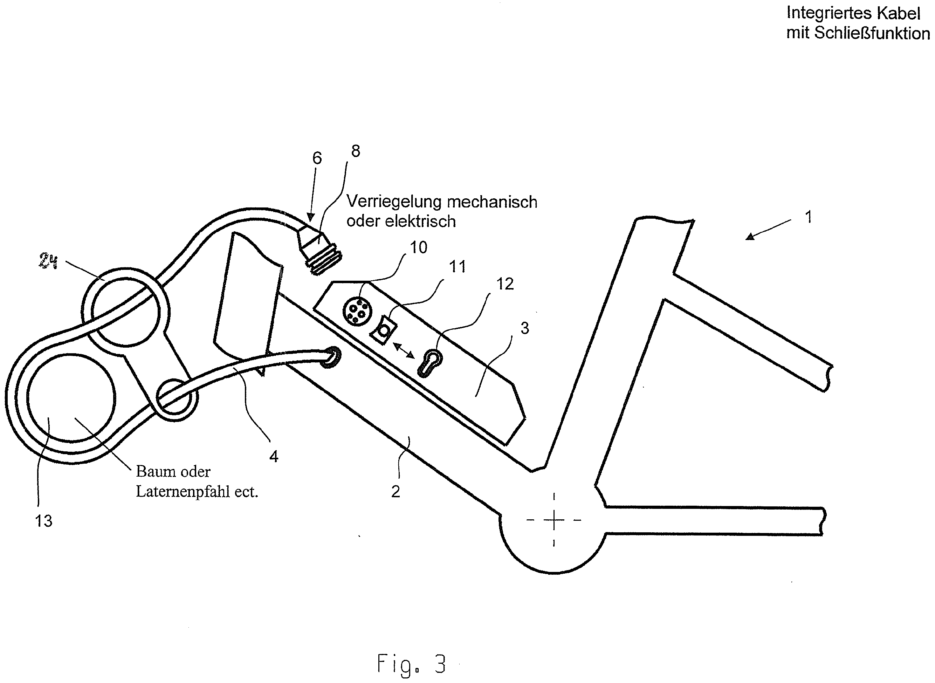

Die mit der Erfindung erzielten Vorteile bestehen insbesondere darin, dass der Benutzer des Pedelecs und/oder E-Bikes während des Transports und/oder der bestimmungsgemäßen Benutzung immer ein aufgeräumtes Ladekabel mitführt, das nicht stört und gut im Rahmen geschützt ist. Der Pedelec- und/oder E-Bike-Nutzer benötigt daher kein zusätzliches mechanisches Schloss wie bisher. Er hat sein einfaches sowie leichtes Ladekabel dabei, und kann dieses an verschiedene standardisierte Ladeeinrichtungen, beispielsweise an den EnergyBus, anschließen und/oder sichern. Das Ladekabel kann nicht mehr gestohlen werden. Der Benutzer kann das Ladekabel auch unabhängig von einer Ladestation als Diebstahlsicherung verwenden, sofern er eine Buchse mit mechanischer Verriegelung am Pedelec und/oder E-Bike hat (siehe auch Fig. 3). Zusätzlich werden Kosten eingespart, da eine Seite des Ladekabels fest installiert ist. Dadurch fallen im Hinblick auf heutige Lösungen ein zweites Schließmodul und ein teurer Stecker weg.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: einen Ausschnitt eines Fahrzeugs mit einem Ladekabel,
- Fig. 2: Detailansichten des Ladekabels und
- Fig. 3: einen Ausschnitt des Fahrzeugs in einer weiteren Ausgestaltung.

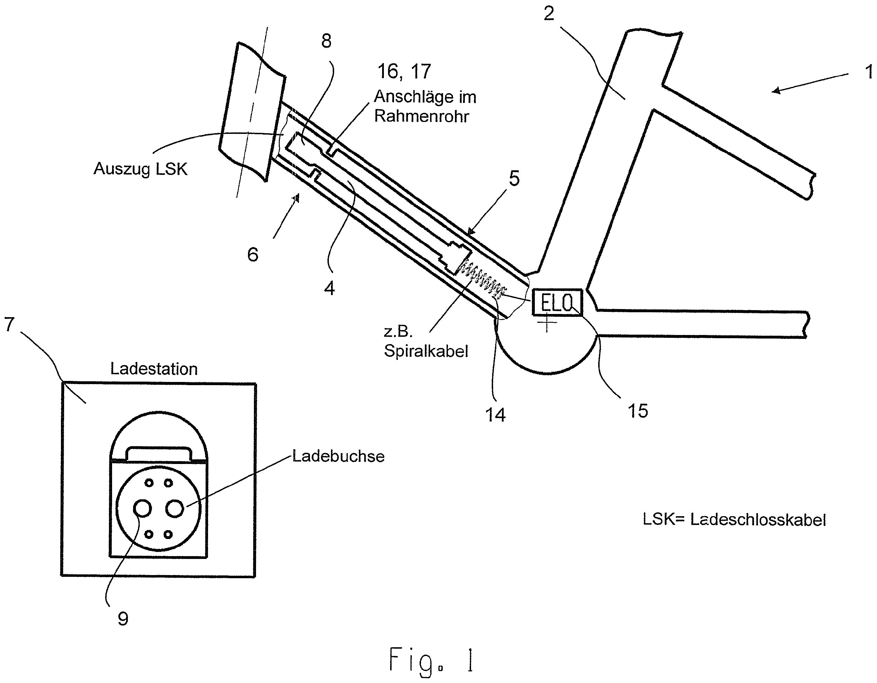

In Fig. 1 ist ein Fahrzeug 1 mit einem Elektroantrieb zu sehen, bei dem es sich insbesondere um ein Pedelec, ein E-Bike o. dgl. handelt. Das Fahrzeug 1 besitzt einen Rahmen 2 und einen am Rahmen 2 angeordneten Akku 3 (siehe Fig. 3) zur Energieversorgung des Elektroantriebs. Selbstverständlich kann der Akku 3 auch im Rahmen 2 oder an sonstiger Stelle des Fahrzeugs 1 angeordnet sein, was jedoch nicht weiter gezeigt ist. Der Akku 3 ist mit der einen Seite 5 eines Ladekabels 4 elektrisch verbunden, derart dass eine Energieübertragung mittels des Ladekabels 4 von einer Ladestation 7 auf den Akku 3 zum Aufladen des Akkus 3 ermöglicht ist.

Das Ladekabel 4 ist ausziehbar und/oder einschiebbar im und/oder am Rahmen 2 angeordnet, und zwar in einem Rahmenrohr. Vorliegend handelt es sich um das Unterrohr des Rahmens 2. Selbstverständlich ist auch eine Anordnung des Ladekabels 4 im Oberrohr oder im Sattelrohr des Rahmens 2 möglich. Das Ladekabel 4 ist somit in der Art eines integrierten Ladekabels ausgestaltet.

An der anderen Seite 6 des Ladekabels 4 ist ein Stecker 8 zur Aufnahme in einer Steckdose 9 an der Ladestation 7 angeordnet. Der Stecker 8 ist in der Steckdose 9 an der Ladestation 7 verriegelbar, so dass eine Diebstahlsicherung für das Fahrzeug 1 während des Ladevorgangs gegeben ist. Die Verriegelung des Steckers 8 in der Steckdose 9 kann mechanisch und/oder elektrisch, beispielsweise elektromotorisch, elektromagnetisch o. dgl., erfolgen.

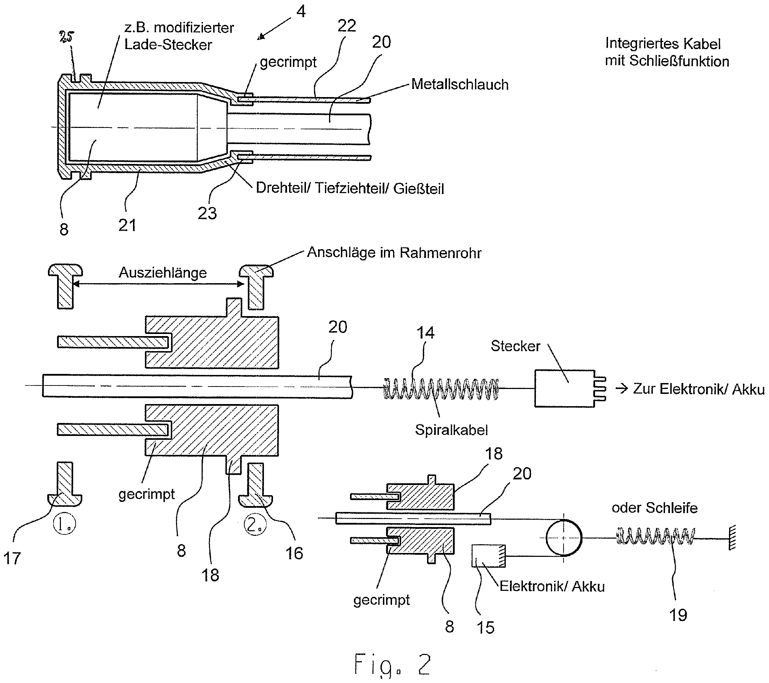

Wie man weiter anhand der Fig. 3 sieht, kann der Akku 3 eine Steckdose 10 zur Aufnahme eines Steckers von einem separaten Ladekabel zur Ladestation 7 aufweisen. Dadurch ist wahlweise auch eine Energieübertragung von der Ladestation 7 mittels des separaten Ladekabels auf den Akku 3 zum Aufladen des Akkus 3 ermöglicht. Es ist eine mittels eines Schlosses 12 betätigbare Verriegelungseinrichtung 11 für die Steckdose 10 im Akku 3 vorgesehen, derart dass der in der Steckdose 10 eingesteckte Stecker des separaten Ladekabels mittels der Verriegelungseinrichtung 11 in der Steckdose 10 sperrbar und/oder freigebbar ist. Dann kann zur Diebstahlsicherung des Fahrzeugs 1 auch der Stecker 8 des integrierten Ladekabels 4, das um einen festen Gegenstand 13, beispielsweise einen Baum, einen Laternenpfahl o. dgl. geschlungen ist, verriegelbar in die Steckdose 10 am Akku 3 einsteckbar sein. Zur Unterstützung für die Diebstahlsicherung kann zusätzlich eine Durchstecköse 24 am Ladekabel 4 angeordnet sein. Gemäß Fig. 2 weist der Stecker 8 des Ladekabels 4 einen Hinterschnitt 25 auf. Die Verriegelungseinrichtung 11 umfasst einen nicht weiter gezeigten, bewegbaren Hebel, derart dass der Hebel zur Verriegelung in den Hinterschnitt 25 des in die Steckdose 10 eingesteckten Steckers 8 des integrierten Ladekabels 4 beziehungsweise des separaten Ladekabels eingreift. Selbstverständlich kann bei einem Verzicht auf die Aufladbarkeit mittels eines separaten Ladekabels die Steckdose 10 ohne elektrische Verbindung zum Akku 3 lediglich für die Diebstahlsicherung mittels des integrierten Ladekabels 4 vorgesehen sein.

Zwecks Ausziehbarkeit des integrierten Ladekabels 4 ist gemäß Fig. 1 das integrierte Ladekabel 4 mittels eines geschützt im Rahmen 2 befindlichen Spiralkabels 14 über eine Elektronik 15 mit dem Akku 3 elektrisch verbunden. Wie weiter anhand von Fig. 2 zu erkennen ist, ist wenigstens ein Anschlag 16 im Rahmen 2 angeordnet zur Zusammenwirkung mit einem Gegenanschlag 18 am integrierten Ladekabel 4, derart dass die eingeschobene Position des Ladekabels 4 im Rahmen 2 fixiert ist. Wenigstes ein weiterer Anschlag 17 ist im Rahmen 2 angeordnet zur Zusammenwirkung mit dem Gegenanschlag 18 am integrierten Ladekabel 4, derart dass die Ausziehlänge des integrierten Ladekabels 4 begrenzt ist. Anstelle eines Spiralkabels kann auch eine federartige Schleife 19, die in der Art einer Zugentlastung wirkt, für das integrierte Ladekabel 4 vorgesehen sein.

Wie man weiter in Fig. 2 sieht, umfasst das integrierte Ladekabel 4 den Stecker 8 sowie eine elektrische Leitung 20. Der Stecker 8 weist eine metallische Hülle 21 und/oder die Leitung 20 weist eine metallische Ummantelung 22 auf. Der Hinterschnitt 25 befindet sich an der metallischen Hülle 21. Die metallische Hülle 21 ist an der metallischen Ummantelung 22 mittels einer Crimp-Verbindung 23 befestigt. Die metallische Ummantelung 22 besteht aus einem Metallschlauch. Die metallische Hülle 21 kann aus einem Drehteil, einem Tiefziehteil, einem Gießteil o. dgl. bestehen.

Schließlich kann es sich noch anbieten, dass bei einer Manipulation am Ladekabel 4 ein Alarm am Fahrzeug 1 erzeugt wird. Dieser Alarm kann am Fahrzeug 1 akustisch, optisch o. dgl. ausgegebenen werden. Falls gewünscht kann vom Fahrzeug 1 in diesem Fall auch eine Meldung an ein Telefon, beispielsweise ein Mobiltelefon und/oder ein Smartphone, des berechtigten Benutzers übermittelt werden, die diesem den Diebstahlversuch für das Fahrzeug 1 anzeigt. Selbstverständlich kann in einem solchen Fall auch der Betrieb des Fahrzeugs 1 gesperrt werden.

So kann das erfindungsgemäße integrierte Ladekabel 4 nicht nur bei Pedelecs, E-Bikes o. dgl. sondern auch in sonstigen Elektrofahrzeugen, beispielsweise in LEV-Systemen (Light Electric Vehicle), eingesetzt werden.

### Bezugszeichen-Liste:

- 1:: Fahrzeug
- 2:: Rahmen
- 3:: Akku
- 4:: (integriertes) Ladekabel
- 5,6:: Seite (des Ladekabels)
- 7:: Ladestation
- 8:: Stecker
- 9:: Steckdose (in Ladestation)
- 10:: Steckdose (an Akku)
- 11:: Verriegelungseinrichtung
- 12:: Schloss
- 13:: (fester) Gegenstand
- 14:: Spiralkabel
- 15:: Elektronik
- 16,17:: Anschlag (im Rahmen)
- 18:: Gegenanschlag (an Ladekabel)
- 19:: (federartige) Schleife
- 20:: (elektrische) Leitung
- 21:: (metallische) Hülle
- 22:: (metallische) Ummantelung
- 23:: Crimp-Verbindung
- 24:: Durchstecköse
- 25:: Hinterschnitt

## Patentansprüche

1. Fahrzeug (1), insbesondere Pedelec oder E-Bike, mit einem Rahmen (2) und mit einem am Rahmen (2) angeordneten Akku (3), wobei der Akku (3) mit der einen Seite (5) eines Ladekabels (4) elektrisch verbunden ist, derart dass eine Energieübertragung mittels des Ladekabels (4) von einer Ladestation (7) auf den Akku (3) zum Aufladen des Akkus (3) ermöglicht ist, und wobei das Ladekabel (4) ausziehbar und einschiebbar in einem Rahmenrohr des Rahmens (2) in der Art eines integrierten Ladekabels (4) angeordnet ist, **dadurch gekennzeichnet, dass** das integrierte Ladekabel (4) mittels eines geschützt im Rahmen (2) befindlichen Spiralkabels (14) über eine Elektronik (15) mit dem Akku (3) elektrisch verbunden ist und dass wenigstens ein Anschlag (16) im Rahmen (2) angeordnet ist zur Zusammenwirkung mit einem Gegenanschlag (18) am integrierten Ladekabel (4), derart dass die eingeschobene Position des Ladekabels (4) im Rahmen (2) fixiert ist, und dass wenigstens ein weiterer Anschlag (17) im Rahmen (2) angeordnet ist zur Zusammenwirkung mit dem Gegenanschlag (18) am integrierten Ladekabel (4), derart dass die Ausziehlänge des integrierten Ladekabels (4) begrenzt ist.

2. Fahrzeug (1) nach Anspruch 1, **dadurch gekennzeichnet, dass** an der anderen Seite (6) des Ladekabels (4) ein Stecker (8) zur Aufnahme in einer Steckdose (9) an der Ladestation (7) angeordnet ist, und dass der Stecker (8) mechanisch und/oder elektrisch verriegelbar in der Steckdose (9) an der Ladestation (7) ist.

3. Fahrzeug (1) nach Anspruch 1 oder 2, **dadurch gekennzeichnet, dass** der Akku (3) eine Steckdose (10) zur Aufnahme eines Steckers von einem separaten Ladekabel zur Ladestation (7) aufweist, derart dass eine Energieübertragung von der Ladestation (7) mittels des separaten Ladekabels auf den Akku (3) zum Aufladen des Akkus (3) ermöglicht ist.

4. Fahrzeug (1) nach Anspruch 3, **dadurch gekennzeichnet, dass** eine Verriegelungseinrichtung (11) für die Steckdose (10) im Akku (3) vorgesehen ist, derart dass der in der Steckdose (10) eingesteckte Stecker des separaten Ladekabels mittels der Verriegelungseinrichtung (11) in der Steckdose (10) sperrbar und/oder freigebbar ist.

5. Fahrzeug (1) nach Anspruch 4, **dadurch gekennzeichnet, dass** der Stecker (8) des integrierten Ladekabels (4) zur Diebstahlsicherung des Fahrzeugs (1) verriegelbar in die Steckdose (10) am Akku (3) einsteckbar ist.

6. Fahrzeug (1) nach einem der Ansprüche 2 bis 5, **dadurch gekennzeichnet, dass** der Stecker (8) des Ladekabels (4) einen Hinterschnitt (25) aufweist, und dass die Verriegelungseinrichtung (11) einen bewegbaren Hebel umfasst, derart dass der Hebel zur Verriegelung in den Hinterschnitt (25) des in die Steckdose (10) eingesteckten Steckers (8) des Ladekabels (4) eingreift.

7. Fahrzeug (1) nach einem der Ansprüche 1 bis 6, **dadurch gekennzeichnet, dass** das integrierte Ladekabel (4) mittels einer Zugentlastung mit dem Akku (3) elektrisch verbunden ist.

8. Fahrzeug (1) nach einem der Ansprüche 1 bis 7, **dadurch gekennzeichnet, dass** bei einer Manipulation am Ladekabel (4) ein Alarm erzeugbar oder eine Meldung an ein Telefon übermittelbar oder der Betrieb des Fahrzeugs (1) sperrbar ist.

9. Fahrzeug (1) nach einem der Ansprüche 2 bis 8 **dadurch gekennzeichnet, dass** eine elektrische Leitung (20) vorgesehen ist und dass der Stecker (8) eine metallische Hülle (21) und/oder die Leitung (20) eine metallische Ummantelung (22) aufweist.

10. Fahrzeug (1) nach Anspruch 9, **dadurch gekennzeichnet, dass** der Hinterschnitt (25) an der metallischen Hülle (21) befindlich ist.

11. Fahrzeug (1) nach Anspruch 10, **dadurch gekennzeichnet, dass** die metallische Hülle (21) an der metallischen Ummantelung (22) mittels einer Crimp-Verbindung (23) befestigt ist.

12. Fahrzeug (1) nach einem der Ansprüche 9 bis 11, **dadurch gekennzeichnet, dass** die metallische Ummantelung (22) aus einem Metallschlauch besteht.

13. Fahrzeug (1) nach Anspruch 12, **dadurch gekennzeichnet, dass** die metallische Hülle (21) aus einem Drehteil oder einem Tiefziehteil oder einem Gießteil besteht.

## Claims

1. Vehicle (1), in particular pedelec or e-bike, comprising a frame (2) and a battery (3) arranged on the frame (2), the battery (3) being electrically connected to one side (5) of a charging cable (4) such that an energy transfer is possible by means of the charging cable (4) from a charging station (7) to the battery (3) for charging the battery (3), and the charging cable (4) being arranged so as to be extendable and insertable in a frame tube of the frame (2) in the manner of an integrated charging cable (4), **characterised in that** the integrated charging cable (4) is electrically connected to the battery (3) by means of a spiral cable (14), which is located in the frame (2) in a protected manner, via an electronic system (15), and **in that** at least one stop (16) is arranged in the frame (2) to cooperate with a counter-stop (18) on the integrated charging cable (4) such that the inserted position of the charging cable (4) in the frame (2) is fixed, and **in that** at least one other stop (17) is arranged in the frame (2) to cooperate with the counter-stop (18) on the integrated charging cable (4) such that the extension length of the integrated charging cable (4) is limited.

2. Vehicle (1) according to claim 1, **characterised in that** on the other side (6) of the charging cable (4) there is arranged a plug (8) for being received in a socket (9) on the charging station (7), and **in that** the plug (8) is mechanically and/or electrically lockable in the socket (9) on the charging station (7).

3. Vehicle (1) according to claim 1 or 2, **characterised in that** the battery (3) has a socket (10) for receiving a plug of a separate charging cable to the charging station (7), such as to enable an energy transfer from the charging station (7) to the battery (3) by means of the separate charging cable for charging the battery (3).

4. Vehicle (1) according to claim 3, **characterised in that** a locking device (11) for the socket (10) is provided in the battery (3), such that the plug of the separate charging cable inserted in the socket (10) is lockable and/or releasable in the socket (10) by means of the locking device (11).

5. Vehicle (1) according to claim 4, **characterised in that** to prevent theft of the vehicle (1) the plug (8) of the integrated charging cable (4) can be inserted in a lockable manner into the socket (10) on the battery (3).

6. Vehicle (1) according to one of claims 2 to 5, **characterised in that** the plug (8) of the charging cable (4) has an undercut (25), and **in that** the locking device (11) comprises a movable lever, such that for locking purposes the lever engages in the undercut (25) of the plug (8) of the charging cable (4) that is inserted into the socket (10).

7. Vehicle (1) according to one of claims 1 to 6, **characterised in that** the integrated charging cable (4) is electrically connected to the battery (3) by means of a strain relief.

8. Vehicle (1) according to one of claims 1 to 7, **characterised in that** in the event of manipulation of the charging cable (4) an alarm can be generated or a message can be transmitted to a telephone or the operation of the vehicle (1) can be disabled.

9. Vehicle (1) according to one of claims 2 to 8, **characterised in that** an electrical line (20) is provided and **in that** the plug (8) has a metal shell (21) and/or the cable (20) has a metal sheathing (22).

10. Vehicle (1) according to claim 9, **characterised in that** the undercut (25) is located on the metal shell (21).

11. Vehicle (1) according to claim 10, **characterised in that** the metal shell (21) is fixed to the metal sheathing (22) by means of a crimp connection (23).

12. Vehicle (1) according to one of claims 9 to 11, **characterised in that** the metal sheathing (22) consists of a metal sleeve.

13. Vehicle (1) according to claim 12, **characterised in that** the metal shell (21) consists of a turned part, a deep-drawn part or a cast part.

## Revendications

1. Véhicule (1), en particulier pedelec ou vélo électrique, avec un cadre (2) et avec une batterie (3) disposée sur le cadre (2), la batterie (3) étant connectée électriquement à un côté (5) d'un câble de charge (4), de manière à permettre un transfert d'énergie au moyen du câble de charge (4) depuis une station de charge (7) sur la batterie (3) pour charger la batterie (3), et le câble de charge (4) étant agencé de façon extensible et insérable dans un tube du cadre (2) à la manière d'un câble de charge intégré (4), **caractérisé en ce que** le câble de charge intégré (4) est relié électriquement à la batterie (3), via un système électronique (15), par un câble spiralé (14) protégé dans le cadre (2) et **en ce qu'**au moins une butée (16) est disposée dans le cadre (2) pour coopérer avec une contre-butée (18) sur le câble de charge intégré (4), de sorte que la position insérée du câble de charge (4) est fixée dans le cadre (2), et **en ce qu'**au moins une autre butée (17) est agencée dans le cadre (2) pour coopérer avec la contre-butée (18) sur le câble de charge intégré (4), de sorte que la longueur d'extension du câble de charge intégré (4) est limitée.

2. Véhicule (1) selon la revendication 1, **caractérisé en ce que** sur l'autre côté (6) du câble de charge (4) est agencée une fiche (8) destinée à être reçue dans une prise (9) de la station de charge (7), et **en ce que** la fiche (8) est verrouillable mécaniquement et/ou électriquement dans la prise (9) de la station de charge (7).

3. Véhicule (1) selon la revendication 1 ou 2, **caractérisé en ce que** la batterie (3) présente une prise (10) pour recevoir une fiche d'un câble de charge séparé à la station de charge (7), de telle sorte qu'un transfert d'énergie de la station de charge (7) vers la batterie (3) soit possible par le câble de charge séparé permettant de charger la batterie (3).

4. Véhicule (1) selon la revendication 3, **caractérisé en ce qu'**un dispositif de verrouillage (11) de la prise (10) est prévu dans la batterie (3), de sorte que la fiche du câble de charge séparé, insérée dans la prise (10), peut être bloquée et/ou libérée au moyen du dispositif de verrouillage (11) dans la prise (10).

5. Véhicule (1) selon la revendication 4, **caractérisé en ce que** la fiche (8) du câble de charge intégré (4) peut être insérée et verrouillée dans la prise (10) de la batterie (3) pour empêcher le vol du véhicule (1).

6. Véhicule (1) selon l'une quelconque des revendications 2 à 5, **caractérisé en ce que** la fiche (8) du câble de charge (4) présente un dégagement (25), et **en ce que** le dispositif de verrouillage (11) comprend un levier mobile, de telle sorte que le levier s'engrène pour le verrouillage, dans le dégagement (25), de la fiche (8) insérée dans la prise (10) du câble de charge (4).

7. Véhicule (1) selon l'une quelconque des revendications 1 à 6, **caractérisé en ce que** le câble de charge intégré (4) est relié électriquement à la batterie (3) au moyen d'un réducteur de tension.

8. Véhicule (1) selon l'une quelconque des revendications 1 à 7, **caractérisé en ce que** lors de la manipulation du câble de charge (4), une alarme peut être générée ou un message peut être transmis à un téléphone ou le fonctionnement du véhicule (1) peut être bloqué.

9. Véhicule (1) selon l'une quelconque des revendications 2 à 8, **caractérisé en ce qu'**une ligne électrique (20) est prévue et **en ce que** la fiche (8) présente une coque métallique (21) et/ou la ligne (20) présente une gaine métallique (22).

10. Véhicule (1) selon la revendication 9, **caractérisé en ce que** le dégagement (25) est situé sur la coque métallique (21).

11. Véhicule (1) selon la revendication 10, **caractérisé en ce que** la coque métallique (21) est fixée à la gaine métallique (22) au moyen d'une liaison sertie (23).

12. Véhicule (1) selon l'une quelconque des revendications 9 à 11, **caractérisé en ce que** la gaine métallique (22) consiste en un tuyau métallique.

13. Véhicule (1) selon la revendication 12, **caractérisé en ce que** la coque métallique (21) consiste en une pièce tournée, une pièce emboutie ou une pièce moulée.
